(19) Europäisches Patentamt / European Patent Office / Office européen des brevets

(11) **EP 4 451 071 A1**

(12) **EUROPEAN PATENT APPLICATION**
published in accordance with Art. 153(4) EPC

(43) Date of publication:
**23.10.2024  Bulletin 2024/43**

(21) Application number: **23794225.5**

(22) Date of filing: **18.10.2023**

(51) International Patent Classification (IPC):
**G05B 19/042** (2006.01)

(52) Cooperative Patent Classification (CPC):
Y02P 90/02

(86) International application number:
**PCT/CN2023/125193**

(87) International publication number:
**WO 2024/183286 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **07.03.2023   CN 202310206988**

(71) Applicant: **CRSC Research & Design Institute Group Co., Ltd.**
**Beijing 100070 (CN)**

(72) Inventors:
• **WANG, Qi**
  **Beijing 100070 (CN)**

• **CUI, Junfeng**
  **Beijing 100070 (CN)**
• **WANG, Zhoufan**
  **Beijing 100070 (CN)**
• **YANG, Mingchun**
  **Beijing 100070 (CN)**
• **SHI, Jing**
  **Beijing 100070 (CN)**
• **CHEN, Lihua**
  **Beijing 100070 (CN)**

(74) Representative: **Haseltine Lake Kempner LLP**
**Cheapside House**
**138 Cheapside**
**London EC2V 6BJ (GB)**

(54) **CONSISTENCY TRACKING CONTROL METHOD AND APPARATUS FOR MULTI-AGENT SYSTEM, DEVICE, AND MEDIUM**

(57)    The invention discloses a consistency tracking control method and device for a multi-agent system, equipment and a medium. The method comprises the steps that a communication topological graph of the multi-agent system and dynamic models, meeting Lipschitz continuous conditions, of a leading agent and a following agent are built; determining a tracking error of the multi-agent system, and a consistency tracking control target and parameter matrix information when the agent system meets a preset assumed condition; determining relative state information between each following agent and the corresponding neighbor agent, and judging whether a relative state value of the multi-agent system can be obtained or not; and determining a consistency tracking controller of the multi-agent control system according to the judgment result, the relative state information and the parameter matrix information. Different completely distributed consistency tracking controllers are designed under the condition that different relative state values are obtained. A controller with higher universality is provided, and the consistency tracking of a high-order nonlinear system under a directed communication graph is realized.

S110

constructing a communication topological graph of the multi-agent system and a dynamic model of a leading agent and following agents that satisfies Lipschitz continuity

S120

determining a tracking error of the multi-agent system, and a goal of consistency tracking control and parameter matrix information when the multi-agent system meets preset assumed conditions according to the dynamic model and the communication topological graph

S130

determining relative state information between each following agent and its corresponding neighboring agent, judging whether a relative state value of the multi-agent system is obtainable, and determining a judgment result

S140

determining a consistency tracking controller of the multi-agent control system according to the judgment result, the relative state information and the parameter matrix information, to cause the tracking error meets the goal of consistency tracking control by the consistency tracking controller

Fig. 1

**Description**

TECHNICAL FIELD

The invention relates to the technical field of mobile communication, in particular to a consistency tracking control method and device for a multi-agent system, equipment and a medium.

BACKGROUND

A multi-agent system is a network system composed of a group of agents with certain perception, communication, computation, and execution capabilities, which are associated through communication and other means. Consistency control is a fundamental and important issue in the coordinated control of multi-agent systems. Consistency control refers to the situation where the states of agents in a multi-agent system reach the same value through negotiations with neighboring agents. Existing consistency control can be roughly divided into two categories: leaderless consistency control and leader-based consistency control, the latter of which is also known as consistency tracking control.

In the prior art, complete distributed controllers are typically used to achieve consistency tracking of multi-agent systems when the relative states are known. However, complete distributed controllers can only achieve consistency tracking of general linear systems under directed communication graphs, and they do not address the issue of consistency tracking when the relative states are unknown.

SUMMARY

The invention provides a consistency tracking control method and device for a multi-agent system, equipment and a medium, so as to realize consistency tracking of a high-order non-linear system under a directed communication topological graph.

According to a first aspect of the invention, a consistency tracking control method for a multi-agent system is provided, comprising:

constructing a communication topological graph of the multi-agent system and a dynamic model of a leading agent and following agents that satisfies Lipschitz continuity;
determining a tracking error of the multi-agent system, and a goal of consistency tracking control and parameter matrix information when the multi-agent system meets preset assumed conditions according to the dynamic model and the communication topological graph;
determining relative state information between each following agent and its corresponding neighboring agent, judging whether a relative state value of the multi-agent system is obtainable, and determining a judgment result; and
determining a consistency tracking controller of the multi-agent control system according to the judgment result, the relative state information and the parameter matrix information, to cause the tracking error meets the goal of consistency tracking control by the consistency tracking controller.

According to a second aspect of the invention, a consistency tracking control apparatus for a multi-agent system is provided, comprising:

a construction module configured to construct a communication topological graph of the multi-agent system and a dynamic model of a leading agent and following agents that satisfies Lipschitz continuity;
a first determination module configured to determine a tracking error of the multi-agent system, and a goal of consistency tracking control and parameter matrix information when the multi-agent system meets preset assumed conditions according to the dynamic model and the communication topological graph;
a second determination module configured to determine relative state information between each following agent and its corresponding neighboring agent, judge whether a relative state value of the multi-agent system is obtainable, and determine a judgment result; and
a third determination module configured to determine a consistency tracking controller of the multi-agent control system according to the judgment result, the relative state information and the parameter matrix information, to cause the tracking error meets the goal of consistency tracking control by the consistency tracking controller.

According to a third aspect of the invention, an electronic device is provided, comprising:

at least one processor; and
a memory communicatively coupled with the at least one processor; wherein

the memory stores a computer program executable by the at least one processor, and the computer program, when executed by the at least one processor, causes the at least one processor to execute the consistency tracking control method for the multi-agent system according to any embodiment of the invention.

According to a fourth aspect of the invention, a computer-readable storage medium is provided. The computer-readable storage medium stores computer instructions for causing a processor to execute the consistency tracking control method for the multi-agent system according to any embodiment of the invention.

In the technical solution adopted in the embodiments of the invention, constructing a communication topological graph of the multi-agent system and a dynamic model of a leading agent and following agents that satisfies Lipschitz continuity; determining a tracking error of the multi-agent system, and a goal of consistency tracking control and parameter matrix information when the multi-agent system meets preset assumed conditions; determining relative state information between each following agent and its corresponding neighboring agent, and judging whether a relative state value of the multi-agent system is obtainable; and determining a consistency tracking controller of the multi-agent control system according to a judgment result, the relative state information and the parameter matrix information. By designing different fully-distributed consistency tracking controllers under different relative state value acquisition conditions, a more generic controller is provided, achieving consistency tracking of high-order non-linear systems under directed communication graphs.

It should be understood that what is described in this section is not intended to identify key or important features of embodiments of the invention, nor is it intended to limit the scope of the invention. Other features of the invention will be readily understood from the following description.

BRIEF DESCRIPTION OF THE DRAWINGS

In order to explain the technical solution in the embodiments of the present invention more clearly, the drawings used in the embodiments will be briefly introduced below. Obviously, the drawings in the following description are only some embodiments of the present invention, and for those of ordinary skill in the art, other drawings can be obtained according to these drawings without paying creative labor.

Fig. 1 is a flowchart of a consistency tracking control method for a multi-agent system according to Embodiment 1 of the invention;
Fig. 2 is a flowchart of a consistency tracking control method for a multi-agent system according to Embodiment 2 of the invention;
Fig. 3 is an exemplary communication topological graph according to Embodiment 2 of the invention;
Fig. 4 is a tracking error variation curve under a first controller according to Embodiment 2 of the invention;
Fig. 5 is an observation error variation curve according to Embodiment 2 of the invention;
Fig. 6 is a tracking error variation curve under a second controller according to Embodiment 2 of the invention;
Fig. 7 is a structural diagram of a consistency tracking control apparatus for a multi-agent system according to Embodiment 3 of the invention; and
Fig. 8 is a structural diagram of an electronic device for implementing the embodiments of the invention.

DETAILED DESCRIPTION

For people skilled in the art to better understand the scheme of the invention, the technical scheme in the embodiments of the invention will be clearly and completely described below in combination with attached drawings. Obviously, the described embodiments are only part of the embodiments of the invention, not all of them. Based on the embodiments of the invention, all other embodiments obtained by those of ordinary skill in the art without making creative labor shall belong to the scope of protection of the invention.

It should be noted that the terms "first" and "second" in the specification and claims of the invention and the drawings are used to distinguish similar objects, and are not necessarily used to describe a specific order or sequence. It should be understood that the data thus used are interchangeable under appropriate circumstances, so that the embodiments of the invention described herein can be implemented in other orders than those illustrated or described herein. Furthermore, the terms "comprise" and "have" and any variations thereof are intended to cover non-exclusive inclusion, for example, a process, method, system, product or device that comprises a series of steps or units is not necessarily limited to those explicitly listed, but may comprise other steps or units not explicitly listed or inherent to such process, method, product or device.

Embodiment 1

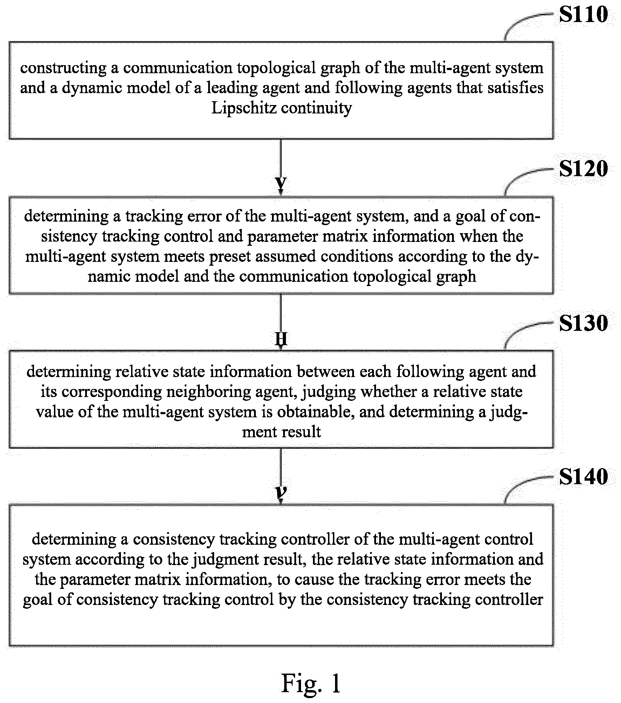

Fig. 1 is a flowchart of a consistency tracking control method for a multi-agent system according to Embodiment 1 of the invention. This embodiment can be applied to consistency tracking control of a multi-agent system, and the method can be executed by a consistency tracking control device for a multi-agent system, which can be implemented in the form of hardware and/or software, and can be configured in an electronic device. As shown in Fig. 1, the method comprises the following steps.

In S110, constructing a communication topological graph of the multi-agent system and a dynamic model of a leading agent and following agents that satisfies Lipschitz continuity.

In this embodiment, the multi-agent system can be understood as a network system composed of a plurality of agents with certain perception, communication, computation, and execution capabilities, which are associated through communication and other means. The communication topological graph can be understood as a communication diagram between agents in the form of a directed graph. The leading agent can be understood as a target agent, such as an enemy attack drone. The following agent can be understood as a follower, such as our defense drone. The dynamic model can be understood as a way to characterize a multi-agent system using a dynamic model.

In particular, a processor can construct the communication topological graph of the multi-agent system and the dynamic model of the leading agent and the following agents that satisfies Lipschitz continuity according to the state of each of agents in the multi-agent system.

As an example, unless otherwise specified, the invention uses the following notations: $\mathbb{R}^{n \times n}$ represents a set of all $n \times n$ real matrices. $I_n$ represents an $n$-dimensional unit matrix. $1_n$ represents an $n$-dimensional column vector with all elements being 1. $A \otimes B$ represents the Kronecker product of $A$ and $B$. For vector $x \in \mathbb{R}^n$, $\|x\|$ and $\|x\|_\infty$ represent the 2 norm (i.e., Euclidean norm) and infinite norm of X respectively. For $x \in \mathbb{R}$, sgn($x$) represents a sign function. $\mathrm{diag}\{x_1, x_2, ..., x_n\} \in \mathbb{R}^{n \times n}$ represents a diagonal matrix composed of elements $x_1, x_2, ..., x_n$. For the given matrix $A$, $A^\mathsf{T}$ represents transposition of $A$, and rank($A$) represents the rank of $A$. If $A$ is reversible, $A^{-1}$ represents the inverse of $A$. For symmetric real matrices $X$ and $Y$ with the same dimension, matrix inequality $X > Y (X \geq Y)$ indicates that matrix $X$ - $Y$ is symmetric positive definite (positive semidefinite). For $z \in \mathbb{C}$, Re($z$) represents the real part of $Z$. The first constructed dynamic model of the leader and the followers can be:

$$\begin{cases} \dot{x}_i = Ax_i + B[u_i + f(x_i, t)], \\ y_i = Cx_i, \end{cases} \qquad i = 0, 1, ..., N \qquad (1)$$

where $x_i \in \mathbb{R}^n$ is the state of an agent, $u_i = \mathbb{R}^q$ is the control input of the $i$-th agent, and $y_i \in \mathbb{R}^m$ is the measurement output of the $i$-th agent. $A$, $B$ and $C$ are constant matrices with compatible dimensions, and $f(x_i, t)$ is a non-linear function. The non-linear function $f(x_i, t)$ meets the Lipschitz condition:

$$\|f(x, t) - f(y, t)\| \leq \gamma \|x - y\|, \quad \forall x, y \in \mathbb{R}^n \qquad (2)$$

$\gamma > 0$, $\gamma$ is a Lipschitz constant. Suppose rank($B$) = $q$, rank($C$) = $m, m \geq q$. Subscript 0 represents the leader, and subscript 1, 2, ..., $N$ represents $N$ followers.

As an example, the communication topological graph of the multi-agent system is in the form of a directed graph. The directed graph $\mathcal{G} = (\mathcal{V}, \varepsilon)$ consists of a non-empty finite node set $\mathcal{V} = \{v_1, v_2, ..., v_n\}$ and a directed edge set $\varepsilon \subset \{(v_i, v_j) | v_i, v_j \in \mathcal{V}\}$. Each of agents is represented by a node in V. Each directed edge is represented by a directed pair $(v_j, v_i) \in \varepsilon$, and $(v_j, v_i) \in \varepsilon$ represents that there is information exchange between agents, which means that information flows from agent $i$ to agent $j$, that is, agent $j$ can get the information of agent $i$. If $(v_j, v_i) \in \varepsilon$, agent $i$ is the neighboring agent of agent $j$. The set $\mathcal{N}_i = \{v_j \in \mathcal{V} | (v_j, v_i) \in \varepsilon\}$ represents the set of neighboring agents of agent $i$. The directed path from node $v_{i_0}$ to node $v_{i_k}$ is represented by the sequence $\{v_{i_0}, v_{i_1}, ..., v_{i_k}\}$, where $(v_{i_{j-1}}, v_{i_j}) \in \varepsilon, j = 1, 2, ..., k$, and the nodes are

not duplicated. Matrix $\mathcal{A}=[a_{ij}]\in\mathbb{R}^{N\times N}$ represents the adjacency matrix of graph $\mathcal{G}$, where $a_{ii} = 0$ and $a_{ij} > 0$, if and only if $(v_j,v_i) \in \varepsilon$, otherwise $a_{ij} = 0$. In fact, $a_{ij}$ defines the weight of edge $(v_j,v_i) \in \varepsilon$. Further, the Laplacian matrix of graph $\mathcal{G}$ is defined: $\mathcal{L}=[l_{ij}]_{N\times N} = \mathcal{D} - \mathcal{A}$, where $\mathcal{D}=\text{diag}\{d_1,d_2,...,d_N\}$ is the degree matrix of graph $\mathcal{G}$, $d_i=\sum_{j\in\mathcal{N}_i}a_{ij}$, $j = 1,2,...,N$. In a directed graph, if there is a directed path from one node to every other node, then the directed graph is said to contain a directed spanning tree and the node is called a root node.

The multi-agent system (1) comprises $N$ followers and one leader. In the invention, the directed graph $\overline{\mathcal{G}}=(\overline{\mathcal{V}},\overline{\varepsilon}),\overline{\mathcal{V}}=\{0,1,...,N\}$ is used to represent the communication between the one leader and $N$ followers in the multi-agent system discussed. The communication between $N$ followers is represented by the directed graph $\mathcal{G}=(\mathcal{V},\varepsilon)$, $\mathcal{V}=\{1,2,...,N\}$. The directed graph $\mathcal{G}=(\mathcal{V},\varepsilon)$ satisfies: $V \subseteq \overline{V}, E \subseteq \overline{E}$, that is, $\mathcal{G}=(\mathcal{V},\varepsilon)$ is a subgraph of $\overline{\mathcal{G}}=(\overline{\mathcal{V}},\overline{\varepsilon})$. The adjacency matrix $\mathcal{A}=[a_{ij}]\in\mathbb{R}^{N\times N}$ of directed graph $\mathcal{G}=(\mathcal{V},\varepsilon)$ satisfies $a_{ij} = 0$, $a_{ij} = 1$ if and only if agent $i$ can receive the information of agent $j$, otherwise $a_{ij} = 0$. The adjacency matrix $\mathcal{B}=\text{diag}\{a_{10},a_{20},...,a_{N0}\}$ of the leader is defined. If the following agent $i, i = 1,2,...,N$ can receive the state information $x_0$ of the leader, then $a_{i0} = 1$, otherwise $a_{i0} = 0$.

In S120, determining a tracking error of the multi-agent system, and a goal of consistency tracking control and parameter matrix information when the multi-agent system meets preset assumed conditions according to the dynamic model and the communication topological graph.

In this embodiment, the tracking error can be understood as an error of state between the following agent and the leading agent. The assumed conditions can be understood as a prerequisite to achieve the goal of consistency tracking control. The goal of consistency tracking control can be understood as the criteria used to determine the consistency between the following agent and the leading agent in a multi-agent system. The parameter matrix information can be understood as a parameter matrix required for constructing a controller.

The assumed conditions comprise: the communication topological graph at least comprises a directed spanning tree, control input of the leading agent is continuous and bounded, and a given matrix A and a given matrix B included in the dynamic model are stabilizable.

In particular, the processor can determine the tracking error of each following agent in the multi-agent system according to the dynamic model and the communication topological graph, determine the tracking error of the multi-agent system according to the tracking error of each following agent, and determine the goal of consistency tracking control and the parameter matrix information of the multi-agent system when the multi-agent system meets the assumed conditions based on the tracking error of the multi-agent system, wherein the goal of consistency tracking control can be that the tracking error converges to zero asymptotically when the multi-agent system meets the assumed conditions.

As an example, the tracking error $e_i$ of each follower in the multi-agent system can be determined by the following formula:

$$e_i = x_i - x_0, i = 1, 2,..., N \qquad (3)$$

Then, the tracking error $e$ of the multi-agent system is determined:

$$e=[e_1^T, e_2^T,..., e_N^T]^T \qquad (4)$$

As an example, for each following agent $i, i = 1,2,...,N$ in the multi-agent system, the goal of consistency tracking control can be expressed by the following formula:

$$\lim_{t\to\infty} e(t)=0 \qquad (5)$$

As an example, the assumed conditions can be expressed as follows. Assumption 1: the directed graph

$\overline{\mathcal{G}} = (\overline{\mathcal{V}}, \overline{\varepsilon}), \mathcal{V} = \{0,1,...,N\}$ contains a directed spanning tree with leader 0 as the root node. Assumption 2: control input of the leader is continuous and bounded, that is, $\|u_0\|_\infty \leq \delta$, where $\delta$ is a positive constant. Assumption 3: (A, B) is stabilizable. According to Assumption 3, there is a matrix $K_0$, which makes the matrix $A-BK_0$ Hurwitz-stable. In this case, the dynamic model (1) can be written as the following model:

$$\begin{cases} \dot{x}_i = A_0 x_i + B[u_i + \overline{f}(x_i,t)], \\ y_i = Cx_i, \qquad\qquad i = 0,1,...,N \end{cases} \qquad (6)$$

where $\dot{x}_i$ is the rewritten state of agent, $A_0 = A - BK_0$, and the non-linear function $\overline{f}(x_i,t) = f(x_i,t) + K_0 x_i$ meets the Lipschitz condition:

$$\left\| \overline{f}(x,t) - \overline{f}(y,t) \right\| \leq \overline{\gamma} \|x - y\|, \quad \forall x, y \in \mathbb{R}^n \qquad (7)$$

where $\overline{\gamma} > 0$ is a corresponding Lipschitz constant.

In S130, determining relative state information between each following agent and its corresponding neighboring agent, judging whether a relative state value of the multi-agent system is obtainable, and determining a judgment result.

In this embodiment, the neighboring agent can be understood as the agent that transmits information when the following agent directly receives information from an adjacent agent. The relative state information can be understood as the state of the following agent relative to the neighboring agent. The relative state value can be understood as the determined value of the relative state of the multi-agent system. The judgment result can be understood as a result used to characterize whether the multi-agent system can be obtained.

In particular, the processor can determine the neighboring agents of each following agent according to the dynamic model and the communication topological graph, and can determine the relative state information between each following agent and its corresponding neighboring agents based on a set mathematical model. In the realistic environment, the state of the multi-agent system may be unmeasurable due to technical limitations, then the processor can judge whether the relative state value of multi-agent system can be obtained, thus identifying situations where the state of the multi-agent system is unmeasurable, and the processor can obtain a judgment result.

As an example, following the explanation of notations in the above example, according to the dynamic model (1), the relative state $\xi_i$ between the $i$-th follower and its neighbor is defined as:

$$\xi_i = \sum_{j=0}^N a_{ij}(x_i - x_j) \qquad (8)$$

In S140, determining a consistency tracking controller of the multi-agent control system according to the judgment result, the relative state information and the parameter matrix information, to cause the tracking error meets the goal of consistency tracking control by the consistency tracking controller.

In this embodiment, the consistency tracking controller can be understood as a controller for keeping the state of the following agent consistent with that of the leading agent.

In particular, the processor can determine a controller determination mode of an adopted consistency tracking controller according to the judgment result, and determine the consistency tracking controller of the multi-agent control system according to the controller determination mode combined with the relative state information and the parameter matrix information, to cause the tracking error meets the goal of consistency tracking control by the consistency tracking controller, even if the tracking error can converge to zero asymptotically.

In the technical solution adopted in the embodiment of the invention, constructing a communication topological graph of the multi-agent system and a dynamic model of a leading agent and following agents that satisfies Lipschitz continuity; determining a tracking error of the multi-agent system, and a goal of consistency tracking control and parameter matrix information when the multi-agent system meets preset assumed conditions; determining relative state information between each following agent and its corresponding neighboring agent, and judging whether a relative state value of the multi-agent system is obtainable; and determining a consistency tracking controller of the multi-agent control system according to a judgment result, the relative state information and the parameter matrix information. By designing different fully-distributed consistency tracking controllers under different relative state value acquisition conditions, a more generic controller is provided, achieving consistency tracking of high-order non-linear systems under directed communication graphs.

Embodiment 2

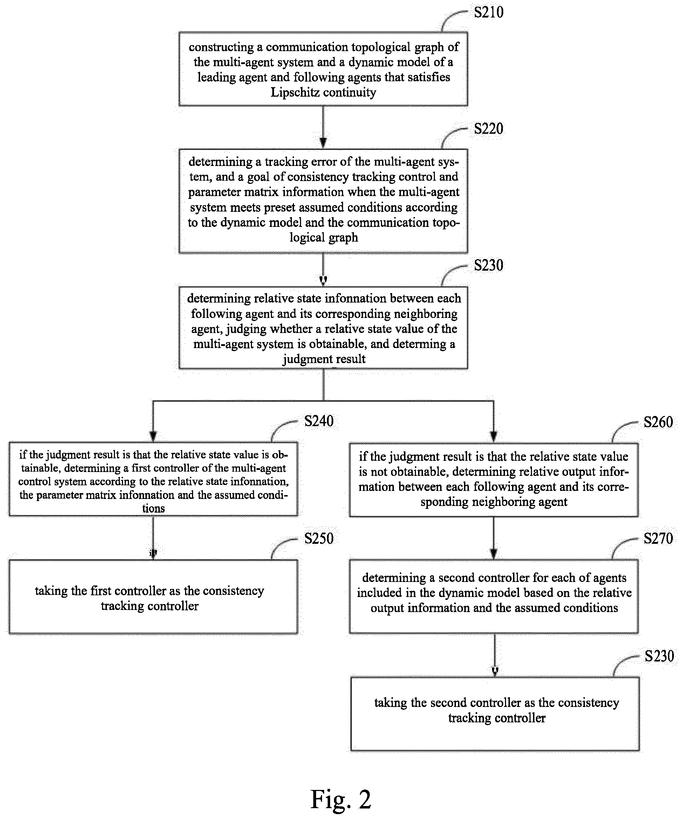

Fig. 2 is a flowchart of a consistency tracking control method for a multi-agent system according to Embodiment 2 of the invention. This embodiment is a further refinement on the basis of the embodiment described above. As shown in Fig. 2, the method comprises the following steps.

In S210, constructing a communication topological graph of the multi-agent system and a dynamic model of a leading agent and following agents that satisfies Lipschitz continuity.

Further, the step of constructing a communication topological graph of the multi-agent system may comprise the following steps.

In a1, according to each agent in the multi-agent system and an information flow direction, determining a node set, a directed edge set and a directed path between two nodes corresponding to the multi-agent system.

In this embodiment, the information flow direction can be understood as the direction of information transmission. The node set can be understood as a node set formed by agents in the multi-agent system as nodes. The directed edge set can be understood as a set of directed edges with information flowing in a certain direction between two nodes. The directed path can be understood as a path between two nodes with information flowing in a certain direction.

In particular, the processor can determine a node set, directed edge set and directed path between two nodes corresponding to the multi-agent system in the communication topological graph according to each of agents in the multi-agent system and the information flow direction therein.

In b1, according to the node set, the directed edge set and the directed path, determining the communication topological graph.

In particular, the processor can determine the communication topological graph based on the node set, the directed edge set and the directed path, according to the rules of the communication topological graph.

In S220, determining a tracking error of the multi-agent system, and a goal of consistency tracking control and parameter matrix information when the multi-agent system meets preset assumed conditions according to the dynamic model and the communication topological graph.

In S230, determining relative state information between each following agent and its corresponding neighboring agent, judging whether a relative state value of the multi-agent system is obtainable, and determining a judgment result.

In S240, if the judgment result is that the relative state value is obtainable, determining a first controller of the multi-agent control system according to the relative state information, the parameter matrix information and the assumed conditions.

In this embodiment, the first controller can be understood as a consistency tracking controller used when the relative state value is obtainable.

In particular, if the judgment result is that the relative state value is obtainable, the processor can determine the first controller of the multi-agent control system according to the relative state information, the parameter matrix information and the assumed conditions.

As an example, following the explanation of notations in the above example, based on the relative state information $\xi_i$, the following first controller $u_i$ can be designed:

$$u_i = \kappa c_i \rho(\xi_i^T P^{-1} \xi_i) K \xi_i + \nu \, \mathrm{sgn}(K \xi_i)$$
$$\dot{c}_i = \xi_i^T \Gamma \xi_i, \qquad i = 1, 2, ..., N \qquad (9)$$

where $\kappa$ and $\nu$ are controller parameters, $\kappa \geq 4$, $\nu \geq \delta$ is a positive constant, and $\delta$ is an upper bound of the control input of the leading agent, which is given by Assumption 2. $c_i(t)$ is time-varying coupling gain, $c_i(0) \geq 1$. $\dot{c}_i$ is a derivative function

of $c_i(t)$. $\rho$ is a smooth non-decreasing function, s is an argument, $\rho(s) = 1 + s^{\frac{1}{2}}$, $s \geq 0$. For the vector

$x = [x_1, x_2, ..., x_n]^T \in \mathbb{R}^n$, $\mathrm{sgn}(x) \triangleq [\mathrm{sgn}(x_1), \mathrm{sgn}(x_2), ..., \mathrm{sgn}(x_n)]^T$ is defined, sgn(•) is a sign function, $K$, $P$, $\Gamma$ are parameter matrices, $K = -B^T P^{-1}$, $\Gamma = P^{-1} B B^T P^{-1}$, and the positive definite symmetric matrix P is the solution of the following linear matrix inequality (LMI):

$$A_0 P + P A_0^T + 2\omega P < 0 \qquad (10)$$

where the constant $\omega > 0$, meeting $-\omega > \max_i \mathrm{Re}(\lambda_i(A_0))$ , and $\lambda_i(A_0)$ is the i-th eigenvalue of the matrix $A_0$.

In S250, taking the first controller as the consistency tracking controller.

In particular, the processor can take the first controller as the consistency tracking controller.

In S260, if the judgment result is that the relative state value is not obtainable, determining relative output information between each following agent and its corresponding neighboring agent.

In this embodiment, the relative output information can be understood as relative output information that can be determined by a following agent and its neighboring agent, such as relative distance and the like.

In particular, if the judgment result is that the relative state value is not obtainable, each of agents can only obtain the relative output information so the relative output information between each following agent and its corresponding neighboring agent can be determined.

As an example, the relative output information between each following agent and its corresponding neighboring agent can be determined by the following formula:

$$\tilde{y}_i = \sum_{j=0}^{N} a_{ij}(y_i - y_j) \qquad (11)$$

where $\tilde{y}_i \in \mathbb{R}^m$ is the measurement output of multi-agent i.

In S270, determining a second controller for each of agents included in the dynamic model based on the relative output information and the assumed conditions.

In this embodiment, the second controller can be understood as a consistency tracking controller used when the relative state value is not obtainable.

In particular, an unknown input observer can be constructed based on the relative output information, the relative state can be observed by the unknown input observer, a finite-time observer of the multi-agent system can be determined based on the unknown input observer, and the second controller can be determined based on the finite-time observer.

Further, the step of determining a second controller for each of agents in the dynamic model based on the relative output information and the assumed conditions, may comprise the following steps.

In a2, constructing an unknown input observer for the relative state information based on the relative output information.

In this embodiment, the unknown input observer can be understood as an observer that observes the relative state when the relative state information is unknown.

In particular, the processor can construct an unknown input observer for the relative state information based on the relative output information.

The step of constructing the unknown input observer for the relative state information based on the relative output information may comprise the following steps.

In a21, determining a dynamic system for the relative output information.

In this embodiment, the dynamic system can be understood as a dynamic system constructed when the relative state value is not obtainable, which is different from the dynamic model.

In particular, the processor can determine the dynamic system when the relative state value is not obtainable based on the determined relative output information.

In a22, performing non-singular transformation on the dynamic system to determine a state space matrix of the dynamic system.

In this embodiment, the state space matrix can be understood as a matrix that transforms the dynamic system into a state space.

In particular, the processor can perform non-singular transformation on the dynamic system to obtain the state space matrix of the transformed dynamical system in the state space representation.

In a23, determining the unknown input observer according to the state space matrix.

In particular, the processor can perform output transformation on the state space matrix to obtain the unknown output observer.

As an example, following the notations and contents in the above example, an unknown input observer for the relative state information is constructed: the relative state information $\xi_i$ is $\xi_i = \sum_{j=0}^{N} a_{ij}(x_i - x_j)$, and the relative output information $\tilde{y}_i$ is $\tilde{y}_i = \sum_{j=0}^{N} a_{ij}(y_i - y_j)$, then the dynamic system for $\xi_i, \tilde{y}_i$ is:

$$\begin{cases} \dot{\xi}_i = A\xi_i + B\left(\sum_{j=0}^{N} a_{ij}(u_i - u_j) + \sum_{j=0}^{N} a_{ij}[f(x_i,t) - f(x_j,t)]\right), \\ \tilde{y}_i = C\xi_i \qquad\qquad i = 1,2,\ldots,N. \end{cases} \qquad (12)$$

where let $v_i(t) = \sum_{j=0}^{N} a_{ij}(u_i - u_j) + \sum_{j=0}^{N} a_{ij}[f(x_i,t) - f(x_j,t)]$, $\xi_i \in \mathbb{R}^n$ is the system state, $v_i(t) \in \mathbb{R}^q$ is unknown input, $\tilde{y}_i \in \mathbb{R}^m$ is the measurement output of multi-agent $i$, and A, B, C and D are constant matrices with compatible dimensions. Next, a finite-time unknown input observer is designed to observe the relative state. Since rank(B)=q, there is a non-singular matrix $T$=[$N$ $D$], $N \in \mathbb{R}^{n \times (n-q)}$, and non-singular transformation is introduced into the system (12) to obtain the relative state information $\overline{\xi}_i$ after non-singular transformation:

$$\xi_i = T\overline{\xi}_i \qquad (13)$$

then the state space matrix of the transformed system (12) is:

$$\begin{cases} \dot{\overline{\xi}}_i = \overline{A}\overline{\xi}_i + \overline{B}v_i(t) \\ \tilde{y}_i = \overline{C}\overline{\xi}_i \end{cases} \qquad (14)$$

where $\dot{\overline{\xi}}_i$ is the system state under the state space matrix,

$$\xi_i = T\overline{\xi}_i = T\begin{bmatrix} \overline{\xi}_{i1} \\ \overline{\xi}_{i2} \end{bmatrix}, \overline{A} = T^{-1}AT = \begin{bmatrix} \overline{A}_{11} & \overline{A}_{12} \\ \overline{A}_{21} & \overline{A}_{22} \end{bmatrix}, \overline{B} = T^{-1}B = \begin{bmatrix} 0 \\ I_q \end{bmatrix}, \overline{C} = CT = [CN \quad CB] \quad \overline{\xi}_{i1} \in \mathbb{R}^{n-q}, \overline{\xi}_{i2} \in \mathbb{R}^q,$$

and since $\overline{\xi}_{i1}$ is irrelevant to the unknown input in the system (12), then:

$$\begin{bmatrix} I_{n-q} & 0 \end{bmatrix}\dot{\overline{\xi}}_i = \begin{bmatrix} \overline{A}_{11} & \overline{A}_{12} \end{bmatrix}\overline{\xi}_i$$
$$\tilde{y}_i = \begin{bmatrix} CN & CB \end{bmatrix}\overline{\xi}_i \qquad (15)$$

Assuming that the column of matrix CB is full rank, there is a non-singular matrix U:

$$U = \begin{bmatrix} CB & Q \end{bmatrix}, U^{-1} = \begin{bmatrix} U_1 \\ U_2 \end{bmatrix} \qquad (16)$$

where the matrix $Q \in \mathbb{R}^{m \times (m-q)}, U_1 \in \mathbb{R}^{q \times m}, \; U_2 \in \mathbb{R}^{(m-q) \times m}$, through output transformation, $\overline{y}_i = \begin{bmatrix} \overline{y}_{i1}^T & \overline{y}_{i2}^T \end{bmatrix}^T = U^{-1} \tilde{y}_i$ after the output transformation can be obtained, and the following can be obtained:

$$\overline{y}_{i1} = U_1 \tilde{y}_i = U_1 CN \dot{\overline{\xi}}_{i1} + \dot{\overline{\xi}}_{i2}$$

$$\overline{y}_{i2} = U_2 \tilde{y}_i = U_2 CN \dot{\overline{\xi}}_{i1} \qquad (17)$$

By substituting formula (17) into formula (16), the following can be obtained:

$$\dot{\overline{\xi}}_{i1} = \tilde{A}_1 \overline{\xi}_{i1} + E_1 \tilde{y}_i$$

$$\tilde{y}_{i2} = \tilde{C}_1 \overline{\xi}_{i1} \qquad (18)$$

where $\tilde{A}_1 = \overline{A}_{11} - \overline{A}_{12} U_1 CN, E_1 = \overline{A}_{12} U_1, \tilde{C}_1 = U_2 CN$.

There exists an unknown input observer if and only if the system (12) meets the following conditions, and the conditions for the existence of an unknown input observer are:

$$(1) rank(CB) = rank(B)$$

$$(2) rank \begin{bmatrix} sI_{n-q} - \overline{A}_{11} & -\overline{A}_{12} \\ CN & CB \end{bmatrix} = n, \forall s \in \mathbb{C}, \mathrm{Re}(s) \geq 0 \qquad (19)$$

the error $\overline{e}_1$ is defined, where $\overline{e}_1 = \hat{\overline{x}}_1 - \overline{x}_1$, and when the above conditions are met, the dynamic error $\dot{\overline{e}}_1$ is:

$$\dot{\overline{e}}_1 = (\tilde{A}_1 - L\tilde{C}_1)\overline{e}_1(t) \qquad (20)$$

According to conditions (19) for the unknown input observer, if $(\tilde{A}_1, \tilde{C}_1)$ is observable or detectable, the unknown input observer of the system (12) is:

$$\dot{\hat{\overline{\xi}}}_{i1} = (\tilde{A}_1 - L\tilde{C}_1)\hat{\overline{\xi}}_{i1} + L^* \tilde{y}_i$$

$$\hat{\overline{\xi}}_i = T \begin{bmatrix} \hat{\overline{\xi}}_{i1} \\ U_1 \tilde{y}_i - U_1 CN \hat{\overline{\xi}}_{i1} \end{bmatrix} \qquad (21)$$

where $\hat{\overline{\xi}}_{i1}$ is the estimated value of $\overline{\xi}_{i1}$, $\hat{\xi}_i$ is the estimated value of $\xi_i \xi_i$, L is an observer gain matrix, and L makes $\tilde{A}_1 - L\tilde{C}_1$ Hurwitz-stable.

In b2, determining a finite-time observer of the multi-agent system according to the unknown input observer.

In particular, the processor can determine the finite-time observer of the multi-agent system according to two unknown input observers.

As an example, the finite-time unknown input observer consists of two unknown input observers $\dot{z}_i^1(t)$ and $\dot{z}_i^2(t)$:

$$\dot{z}_i^1(t) = (\tilde{A}_1 - L_1 \tilde{C}_1) z_i^1(t) + L_1^* \tilde{y}_i(t)$$
$$\dot{z}_i^2(t) = (\tilde{A}_1 - L_2 \tilde{C}_1) z_i^2(t) + L_2^* \tilde{y}_i(t) \qquad (22)$$

Then, it can be determined that the finite-time observer of the multi-agent system is:

$$\dot{z}_i(t) = F z_i(t) + H \tilde{y}_i(t)$$
$$\varsigma_i(t) = \bar{K} \left[ z_i(t) - e^{F\tau} z_i(t - \tau) \right]$$
$$\hat{\xi}_i(t) = T \begin{bmatrix} \varsigma_i(t) \\ U_1 \tilde{y}_i(t) - U_1 C N \varsigma_i(t) \end{bmatrix} \qquad (23)$$

where $z_i(t) = \begin{bmatrix} z_i^1(t) \\ z_i^2(t) \end{bmatrix}$, $z_i(t-\tau) = \begin{bmatrix} z_i^1(t-\tau) \\ z_i^2(t-\tau) \end{bmatrix}$, $\tau$ represents a time delay constant, and $F, H, S, \bar{K}$ represent parameter matrices. The parameter matrices are as follows:

$$F = \begin{bmatrix} F_1 & 0_{n-q,n-q} \\ 0_{n-q,n-q} & F_2 \end{bmatrix}, H = \begin{bmatrix} L_1^* \\ L_2^* \end{bmatrix} S = \begin{bmatrix} I_{n-q} \\ I_{n-q} \end{bmatrix}, G = \begin{bmatrix} \bar{B}_1 \\ \bar{B}_1 \end{bmatrix}, z = \begin{bmatrix} z_1 \\ z_2 \end{bmatrix}, \bar{K} = \begin{bmatrix} I_{n-q} & 0_{n-q,n-q} \end{bmatrix} \begin{bmatrix} S & e^{F\tau} S \end{bmatrix}^{-1},$$

where $F_i = \tilde{A}_1 - L_1 \tilde{C}_1$, $L_i^* = L_i U_2 + E_1$, $i = 1,2$, and when $t \geq t_0 + \tau$, $\hat{\xi}_i(t) = \xi_i(t)$.

In c2, if the assumed conditions and the set conditions are met, determining the second controller based on the finite-time observer.

In this embodiment, the set conditions can be understood as only the relative output information being obtainable.

In particular, when only the relative output information is obtainable, the processor can determine the second controller based on the finite-time observer.

As an example, based on the finite-time observer determined above, the following second controller $u_i$ is designed for each of agents in the multi-agent system (1):

$$u_i = \kappa c_i \rho(\hat{\xi}_i^T P^{-1} \hat{\xi}_i) K \hat{\xi}_i + \nu \operatorname{sgn}(K \hat{\xi}_i) \qquad (24)$$

where $\kappa \geq 4$, $\nu \geq \delta$ is a positive constant, and $\delta$ is the upper bound of the control input of the leader, which is given by Assumption 2. $\rho(s) = 1 + s^{\frac{3}{2}}$, $s \geq 0$ is a smooth non-decreasing function, and the parameter explanation in the above example is followed. $c_i(t)$ is time-varying coupling gain, which meets the following conditions:

$$c_i(t) = 0, 0 \leq t < \tau$$
$$c_i(\tau) \geq 1, \dot{c}_i = \hat{\xi}_i^T \Gamma \hat{\xi}_i, t \geq \tau \qquad (25)$$

where $\tau > 0$, which makes the matrix $[S\ e^{F\tau}\ S]$ reversible. The physical meaning of $\tau$ is the time required for the observer state $\hat{\xi}_i(t)\hat{\xi}_i(t)$ to converge to $\xi_i(t)$.

In S280, taking the second controller as the consistency tracking controller.

In particular, the processor can take the second controller as the consistency tracking controller.

According to the consistency tracking control method for the multi-agent system provided by Embodiment 2, if the relative state value is obtainable according to the judgment result, a fully-distributed first controller that does not rely on global information such as the Laplacian matrix of the communication topological graph is designed based on the relative state information between the following agent and its neighboring agents, a method for consistency tracking of multi-agent systems under directed graphs is provided. If the relative state value is not obtainable, an unknown input observer is constructed based on the relative output information between the following agent and its neighboring agents, then, a finite-time unknown input observer is determined by on the unknown input observer, and a fully-distributed second controller does not depend on global information such as the Laplacian matrix of the communication graph is designed based on the finite-time observer, a method for consistency tracking of multi-agent systems under directed graphs is provided. Therefore, the method achieves consistency tracking of high-order non-linear systems under directed communication topological graphs and is more general in terms of applicable multi-agent systems and communication topological graphs. It can also achieve consistency tracking when the leader agent has non-zero bounded control input.

As a first alternative embodiment of Embodiment 2, on the basis of the above-mentioned embodiment, further optimization may be performed, comprising:

proving the validity of the consistency tracking controller by using the Lyapunov function and Lasalle's theorem.

In particular, in order to verify the validity of the consistency tracking controller in the invention, a relative state dynamics model corresponding to the relative state information can be obtained according to the dynamics model and the relative state information, and then the Lyapunov function corresponding to the relative state dynamics model can be determined, and then, the derivative of the Lyapunov function along the relative state dynamics model is determined, the minimum value of the derivative is derived according to the set conditions that need to be met, and combined with the Lasalle's theorem, it can be determined that the relative state information asymptotically converges to zero, so as to prove the validity of the consistency tracking controller.

Take the second controller as an example to prove the validity of the consistency tracking controller. According to system (1) and formula (5), the dynamic model $\xi_i(t)$ can be obtained:

$$\dot{\xi}_i = A\xi_i + B\sum_{j=0}^{N} a_{ij}(u_i - u_j) + B\sum_{j=0}^{N} a_{ij}[f(x_i,t) - f(x_j,t)]$$

Consider the following Lyapunov function $V_3$:

$$V_3 = \frac{1}{2}\sum_{i=1}^{N} \xi_i^T \xi_i$$

The derivative of the Lyapunov function $V_3$ along the above dynamic model is:

$$\dot{V}_3 = \sum_{i=1}^{N} \xi_i^T (A\xi_i + B\sum_{j=0}^{N} a_{ij}(u_i - u_j) + B\sum_{j=0}^{N} a_{ij}[f(x_i,t) - f(x_j,t)])$$

$$\leqslant \sum_{i=1}^{N} \|\xi_i\| (\|A\xi_i\| + \|B\|\sum_{j=0}^{N} a_{ij}\|u_i - u_j\| + B\sum_{j=0}^{N} a_{ij}\|f(x_i,t) - f(x_j,t)\|)$$

According to the contents in the above example, the finite time $\tau > 0$ is selected, so as to make the matrix $[S\ e^{F\tau}\ S]$ reversible, then $\hat{\xi}_i(t) = \xi_i(t)$, $\forall t \geq \tau$. For $\forall t \in [0,\tau]$, $u_i(t) = v\ \mathrm{sgn}(K\hat{\xi}_i)$, then

$$\sum_{j=0}^{N} a_{ij}\|u_i - u_j\| \leqslant \sum_{j=1}^{N} a_{ij}(\|v\ \mathrm{sgn}(K\hat{\xi}_i)\| + \|v\ \mathrm{sgn}(K\hat{\xi}_j)\|) + a_{i0}(\|v\ \mathrm{sgn}(K\hat{\xi}_i)\| + \|u_0\|)$$

$$\leqslant 2(d_i + a_{i0})\sqrt{q}v$$

$$d_i = \sum_{j=1}^{N} a_{ij}, \left\| v\,\mathrm{sgn}(K\hat{\xi}_i) \right\| \leqslant \sqrt{q}v, \|u_0\| \leqslant \sqrt{q}\delta \leqslant \sqrt{q}v, q \geq 1$$

where , and $q$ is the dimension of the control input.

Then $\dot{V}_3 \leqslant \eta_1 V_3 + \eta_2 \sqrt{V_3}$ can be derived, where

$$\eta_0 = \max_{1 \leqslant i \leqslant N} \left\{ 2(d_i + a_{i0})\sqrt{q}v \|B\|, 2(d_i + a_{i0})\ \overline{T}\|B\| \right\}, \quad \eta_1 = 2\|A\| + 2\eta_0\sqrt{2N}, \quad \eta_2 = \eta_0\sqrt{2N} \quad .$$

Then $V_3(t) \leqslant \left( e^{(\eta_1/2)t}\sqrt{V_3(0)} + \eta_2/\eta_1(e^{(\eta_1/2)t} - 1) \right)^2$, which means that the solution of the system will not approach infinity within a finite time $\tau$. Therefore, $\hat{\xi}_i(t) = \xi_i(t)$, $\forall t \geq \tau$, in this case, the control input is

$$u_i = \kappa c_i \rho(\xi_i^T P^{-1}\xi_i)K\xi_i + v\,\mathrm{sgn}(K\xi_i)$$ , and $c_i(\tau) \geq 1, \dot{c}_i = \xi_i^T \Gamma \xi_i$ , $t \geq \tau$. The multi-agent system (1) can achieve consistency tracking control. In addition, the time-varying coupling gain $c_i(\tau)$, i = 1, 2,.., $N$, converges to some constants.

In the first alternative embodiment of Embodiment 2, the validity of the first controller and the second controller provided in this embodiment can be verified by using the Lyapunov function and Lasalle's theorem.

In order to better understand the invention, two examples are given to verify the validity of the first controller and the second controller respectively.

Example 1: If the judgment result is that the relative state value is obtainable, the first controller can be verified by the following steps.

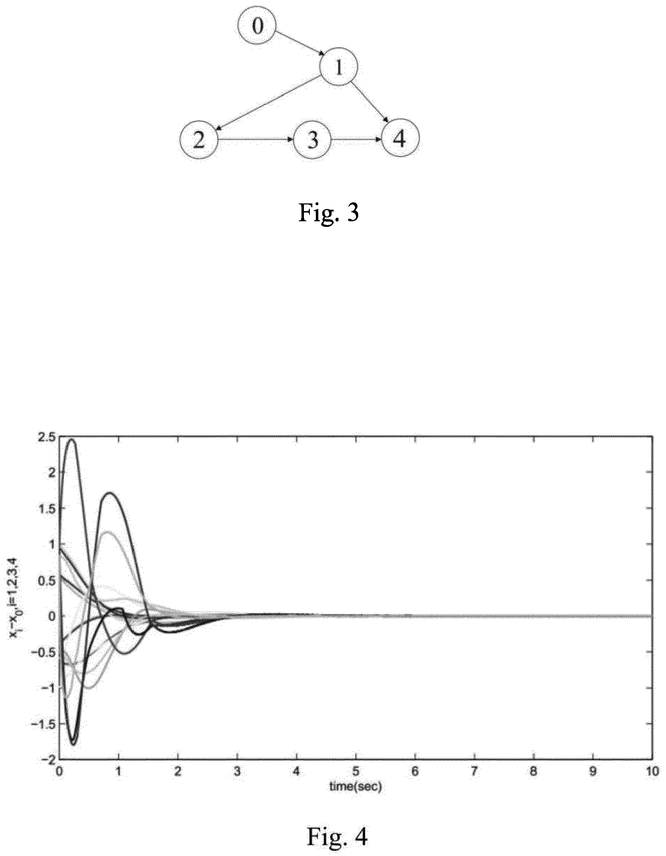

In Step 1, constructing a multi-agent system consisting of a leader and four followers according to the multi-agent system discussed. Fig. 3 is an exemplary communication topological graph provided by Embodiment 2 of the invention. The dynamic model for each of agents is:

$$\begin{cases} \dot{x}_i = Ax_i + B[u_i + f(x_i,t)], \\ y_i = Cx_i, \end{cases} \qquad i = 0,1,2,3,4 \qquad (26)$$

$$A = \begin{bmatrix} 0 & 1 & 0 & 0 \\ -1 & -1 & 1 & 0 \\ 0 & 0 & 0 & 1 \\ 1 & 0 & -1 & 0 \end{bmatrix}, B = \begin{bmatrix} 0 \\ 0 \\ 0 \\ 1 \end{bmatrix}, C = \begin{bmatrix} 1 & 0 & 0 & 0 \\ 0 & 0 & 0 & 1 \end{bmatrix}$$

where , subscript 0 represents the leader, $u_0 = \cos(t)$. The non-linear function $f(x_i,t) = -4x_{i1} + 3\sin(x_{i2}) - 4x_{i3}$, i = 0,1,2,3,4.

In Step 2, determining a tracking error of each follower: $e_i = x_i - x_0$, i=1,2,3,4, and determining a tracking error of the multi-agent system: $e = [e_1^T, e_2^T, e_3^T, e_4^T]^T$ .

Here, (A, B) is stabilizable. According to Assumption 3, there exists a matrix $K_0 = [10\ 24\ 26\ 9]$, so that the eigenvalues of the matrix $A_0 = A - BK_0$ are -3, -2, -2, -3. Taking $\omega = 1.5$, and solve the linear matrix inequality, i.e., formula (7), by using Matlab, to obtain the matrix $K$, $P$, $\Gamma$:

$$P = \begin{bmatrix} 3.3435 & -5.3222 & 5.0181 & -4.1449 \\ -5.3222 & 9.7385 & -11.1616 & 13.0660 \\ 5.0181 & -11.1616 & 16.5250 & -26.9179 \\ -4.1449 & 13.0660 & -26.9179 & 61.2566 \end{bmatrix}, \Gamma = \begin{bmatrix} 0.9589 & 1.4233 & 1.0768 & 0.2497 \\ 1.4233 & 2.1125 & 1.5982 & 0.3705 \\ 1.0768 & 1.5982 & 1.2092 & 0.2803 \\ 0.2497 & 0.3705 & 0.2803 & 0.0650 \end{bmatrix}$$

$$K = \begin{bmatrix} -0.9793 & -1.4534 & -1.0996 & -0.2549 \end{bmatrix}$$

In Step 3, the relative state information between a following agent and its neighboring agents is defined:

$$\xi_i = \sum_{j=0}^{N} a_{ij}(x_i - x_j), \quad i = 1,2,3,4 \tag{27}$$

In Step 4, according to Step 3, controller parameters are selected to be $\kappa = 6$, $v = 2$, and $c_i(0)=2, i=1,2,3,4$ is selected and $\rho(s)=1+s^{\frac{3}{2}}$, $s \geq 0$ is a smooth non-decreasing function. For the first controller:

$$u_i = \kappa c_i \rho(\xi_i^T P^{-1} \xi_i) K \xi_i + v \, \mathrm{sgn}(K \xi_i)$$
$$\dot{c}_i = \xi_i^T \Gamma \xi_i \qquad i = 1,2,3,4 \tag{28}$$

Here, the initial state of the agent is randomly selected in the interval [-1, 1].

Fig. 4 is a tracking error variation curve under a first controller according to Embodiment 2 of the invention, showing the change of the tracking error of a follower $e_i=x_i-x_0$, $i$=1,2,3,4 with time. From the figure, it can be seen that the tracking error asymptotically converges to zero, satisfying the proposed goal of consistency tracking control, which proves the validity of the first controller proposed by the invention.

Example 2: If the judgment result is that the relative state value is not obtainable, following the dynamic model (26) and communication topological graph provided by the above example, the second controller can be verified by the following steps.

In Step 1, for the multi-agent system, the relative output information between a following agent and its neighboring agents is defined, and a finite-time distributed observer is designed based on the relative output information to observe the relative state of the multi-agent system.

$$\xi_i = \sum_{j=0}^{N} a_{ij}(x_i - x_j) \qquad\qquad \tilde{y}_i = \sum_{j=0}^{N} a_{ij}(y_i - y_j)$$

Note that $\xi_i = \sum_{j=0}^{N} a_{ij}(x_i - x_j)$ defines the relative state information, and $\tilde{y}_i = \sum_{j=0}^{N} a_{ij}(y_i - y_j)$ defines the relative output. There is a finite-time unknown input observer:

$$\dot{z}_i(t) = F z_i(t) + H \tilde{y}_i(t)$$
$$\varsigma_i(t) = \overline{K}\left[ z_i(t) - e^{F\tau} z_i(t-\tau) \right]$$
$$\hat{\xi}_i(t) = T \begin{bmatrix} \varsigma_i(t) \\ U_1 \tilde{y}_i(t) - U_1 CN \varsigma_i(t) \end{bmatrix} \tag{29}$$

Let $\tau$ =2, $T$, $Q$, $U$, $L_1$, $L_2$, $F$, $H$, $\overline{K}$ can be determined:

$$T = I_4, Q = \begin{bmatrix} 1 \\ 0 \end{bmatrix}, U = \begin{bmatrix} 0 & 1 \\ 1 & 0 \end{bmatrix}, L_1 = \begin{bmatrix} 5 \\ 5 \\ 6 \end{bmatrix}, L_2 = \begin{bmatrix} 14 \\ 59 \\ 120 \end{bmatrix}$$

$$F = \begin{bmatrix} -5 & 1 & 0 & 0 & 0 & 0 \\ -6 & -1 & 1 & 0 & 0 & 0 \\ -6 & 0 & 0 & 0 & 0 & 0 \\ 0 & 0 & 0 & -14 & 1 & 0 \\ 0 & 0 & 0 & -60 & -1 & 1 \\ 0 & 0 & 0 & -120 & 0 & 0 \end{bmatrix}, H = \begin{bmatrix} 5 & 0 \\ 5 & 0 \\ 6 & 1 \\ 14 & 0 \\ 59 & 0 \\ 120 & 1 \end{bmatrix}$$

$$\bar{K} = \begin{bmatrix} -2.3129 & 1.1121 & -0.3565 & 3.3129 & -1.1121 & 0.3565 \\ -24.7762 & 11.9061 & -3.8150 & 24.7762 & -10.9061 & 3.8150 \\ -79.7253 & 38.2917 & -12.2632 & 79.7253 & -38.2917 & 13.2632 \end{bmatrix}$$

In Step 2, according to Step 1, a second controller is designed based on the finite-time unknown input observer:

$$u_i = \kappa c_i \rho(\hat{\xi}_i^T P^{-1} \hat{\xi}_i) K \hat{\xi}_i + v\,\mathrm{sgn}(K\hat{\xi}_i) \tag{30}$$

Controller parameters are $\kappa$=6 and $v$=2, and $\rho(s) = 1 + s^{\frac{3}{2}}, s$ , $s \geq 0$ is a smooth non-decreasing function. See Example 1 for the matrices $K$, $P$, $\Gamma$, and $c_i(t)$ is time-varying coupling gain, which meets the following conditions:

$$c_i(t) = 0, 0 \leq t < 2$$

$$c_i(2) \geq 1, \dot{c}_i = \hat{\xi}_i^T \Gamma \hat{\xi}_i, t \geq 2$$

Here, the initial state of the agent and the initial state of the observer are randomly selected in the interval [-2, 2].

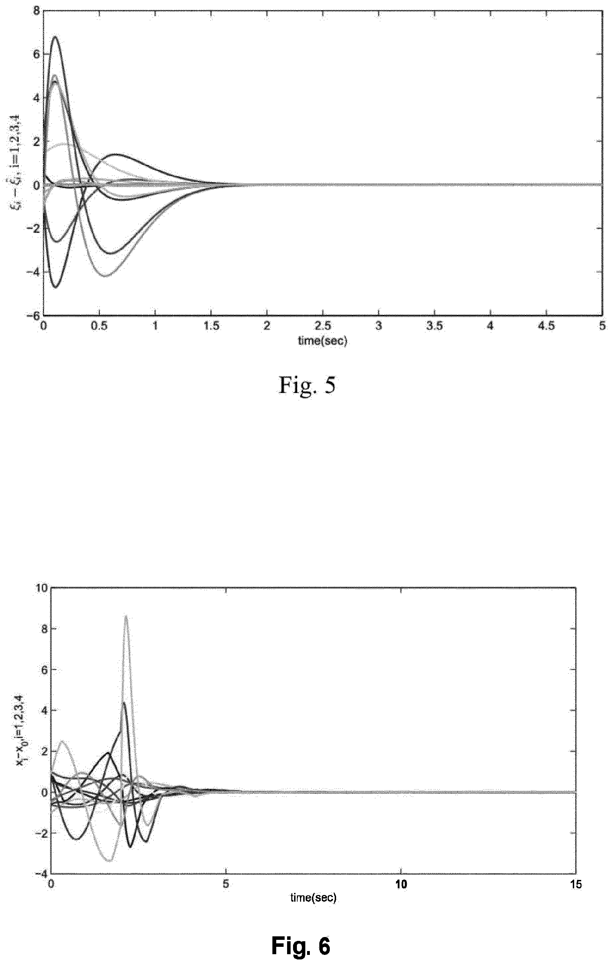

Fig. 5 is an observation error variation curve according to Embodiment 2 of the invention. As shown in Fig. 5, the vertical axis indicates the observation error: $\xi_i(t)$-$\hat{\xi}_i(t)$, $i$=1,2,3,4, and the horizontal axis indicates time. From the figure, it can be seen that the observation error converges to zero within 2 seconds.

Fig. 6 is a tracking error variation curve under a second controller according to Embodiment 2 of the invention. As shown in Fig. 6, the vertical axis indicates the tracking error $e_i=x_i-x_0$, $i$=1,2,3,4, and the horizontal axis indicates time. From the figure, it can be seen that the tracking error asymptotically converges to zero, satisfying the proposed goal of consistency tracking control, which proves the validity of the second controller proposed by the invention.

Embodiment 3

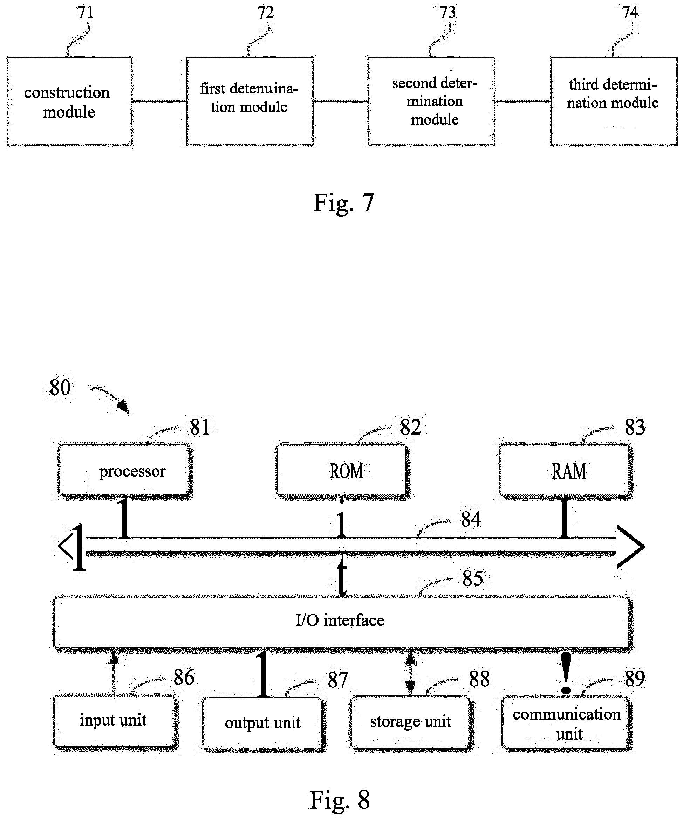

Fig. 7 is a structural diagram of a consistency tracking control apparatus for a multi-agent system according to Embodiment 3 of the invention. As shown in Fig. 7, the apparatus comprises a construction module 71, a first determination module 72, a second determination module 73 and a third determination module 74.

Here, the construction module 71 is configured to construct a communication topological graph of the multi-agent system and a dynamic model of a leading agent and following agents that satisfies Lipschitz continuity;

the first determination module 72 is configured to, according to the dynamic model and the communication topological graph, determine a tracking error of the multi-agent system, and a goal of consistency tracking control, and parameter matrix information when the multi-agent system meets preset assumed conditions;

the second determination module 73 is configured to determine relative state information between each following agent and its corresponding neighboring agent, judge whether a relative state value of the multi-agent system is obtainable, and determine a judgment result; and

the third determination module 74 is configured to, according to the judgment result, the relative state information and the parameter matrix information, determine a consistency tracking controller of the multi-agent control system, to cause the tracking error meets the goal of consistency tracking control by the consistency tracking controller.

The technical solution adopted in the embodiment of the invention comprises: constructing a communication topological graph of the multi-agent system and a dynamic model of a leading agent and following agents that satisfies Lipschitz continuity; determining a tracking error of the multi-agent system, and a goal of consistency tracking control and parameter matrix information when the multi-agent system meets preset assumed conditions; determining relative state information between each following agent and its corresponding neighboring agent, and judging whether a relative state value of the multi-agent system is obtainable; and determining a consistency tracking controller of the multi-agent control system according to a judgment result, the relative state information and the parameter matrix information. By designing different fully-distributed consistency tracking controllers under different relative state value acquisition conditions, a more generic controller is provided, achieving consistency tracking of high-order non-linear systems under directed communication graphs.

Optionally, constructing a communication topological graph of the multi-agent system comprises:

determining a node set, directed edge set and directed path between two nodes corresponding to the multi-agent system according to each of agents in the multi-agent system and the information flow direction; and
determining the communication topological graph according to the node set, the directed edge set and the directed path.

Optionally, the third determination module 74 comprises:

a first determination unit configured to, if the judgment result is that the relative state value is obtainable, determine a first controller of the multi-agent control system according to the relative state information, the parameter matrix information and the assumed conditions;
a second determination unit configured to take the first controller as the consistency tracking controller;
a third determination unit configured to, if the judgment result is that the relative state value is not obtainable, determine relative output information between each following agent and its corresponding neighboring agent;
a fourth determination unit configured to, based on the relative output information and the assumed conditions, determine a second controller for each of agents included in the dynamic model; and
a fifth determination unit configured to take the second controller as the consistency tracking controller.

Further, the fourth determination unit comprises:

a construction subunit configured to construct an unknown input observer for the relative state information based on the relative output information;
a first determination subunit configured to determine a finite-time observer of the multi-agent system according to the unknown input observer; and
a second determination subunit configured to, if the assumed conditions and set conditions are met, determine the second controller based on the finite-time observer.

Here, the construction subunit is specifically configured to:

determine a dynamic system for the relative output information and the relative state information;
perform non-singular transformation on the dynamic system to determine a state space matrix of the dynamic system; and
determine the unknown input observer according to the state space matrix.

Optionally, the apparatus further comprises:
a proof module configured to prove the validity of the consistency tracking controller by using the Lyapunov function and Lasalle's theorem.
Further, the assumed conditions comprise:

the communication topological graph at least comprises one directed spanning tree,
control input of the leading agent is continuous and bounded, and
a given matrix A and a given matrix B included in the dynamic model are stabilizable.

The consistency tracking control apparatus for the multi-agent system provided by the embodiment of the invention can execute the consistency tracking control method for the multi-agent system provided by any embodiment of the invention, and has functional modules for executing the method and corresponding beneficial effects.

Embodiment 4

Fig. 8 is a structural diagram of an electronic device 80 for implementing the embodiments of the invention. The electronic device is intended to represent various forms of digital computers, such as laptop computers, desktop computers, workstations, personal digital assistants, servers, blade servers, mainframe computers, and other suitable computers. The electronic device can also represent various forms of mobile devices, such as personal digital processors, cellular phones, smart phones, wearable devices (such as helmets, glasses, watches, etc.) and other similar computing devices. The components shown herein, their connections and relationships, and their functions are only examples, and are not intended to limit the implementation of the invention described and/or claimed herein.

As shown in Fig. 8, the electronic device 80 comprises at least one processor 81, and a memory, such as a read-only memory (ROM) 82, a random access memory (RAM) 83 and the like, which communicatively coupled with the at least one processor 81, wherein the memory stores a computer program executable by the at least one processor, and the processor 81 can perform various appropriate actions and processes according to a computer program stored in the ROM 82 or a computer program loaded into the RAM 83 from a storage unit 18. In the RAM 83, various programs and data required for the operation of the electronic device 80 can also be stored. The processor 81, the ROM 82 and the RAM 83 are connected to each other through a bus 84. An input/output (I/O) interface 85 is also connected to the bus 84.

Many components in the electronic device 80 are connected to the I/O interface 85, including: input units 86 such as keyboards and mouse, output units 87 such as various types of displays and speakers, storage units 88 such as magnetic disks and optical disks, and communication units 89 such as network cards, modems and wireless communication transceivers. The communication unit 89 allows the electronic device 80 to exchange information/data with other devices through computer networks such as the Internet and/or various telecommunication networks.

The processor 81 may be various general-purpose and/or special-purpose processing components with processing and computing capabilities. Some examples of the processor 81 include, but are not limited to, a central processing unit (CPU), a graphics processing unit (GPU), various specialized artificial intelligence (AI) computing chips, various processors running machine learning model algorithms, a digital signal processor (DSP), and any suitable processor, controller, microcontroller, etc. The processor 81 executes various methods and processes described above, such as the consistency tracking control method for the multi-agent system.

In some embodiments, the consistency tracking control method for the multi-agent system can be implemented as a computer program tangibly embodied in a computer-readable storage medium, such as the storage unit 18. In some embodiments, part or all of the computer program may be loaded and/or installed on the electronic device 80 via the ROM 82 and/or a communication unit 19. When the computer program is loaded into the RAM 83 and executed by the processor 81, one or more steps of the consistency tracking control method for the multi-agent system described above can be executed. Alternatively, in other embodiments, the processor 81 may be configured to execute the consistency tracking control method for the multi-agent system by any other suitable means (for example, by means of firmware).

Various implementations of the systems and techniques described above herein may be implemented in digital electronic circuitry, integrated circuit systems, field programmable gate arrays (FPGA), application specific integrated circuits (ASIC), application specific standard products (ASSP), system-on-a-chip (SOC), complex programmable logic devices (CPLD), computer hardware, firmware, software, and/or combinations thereof. These various implementations may include being implemented in one or more computer programs that can be executed and/or interpreted on a programmable system comprising at least one programmable processor, and the programmable processor may be a special-purpose or general-purpose programmable processor and can receive data and instructions from a storage system, at least one input device, and at least one output device, and transmit data and instructions to the storage system, the at least one input device, and the at least one output device.

The computer program for implementing the method of the invention can be written in any combination of one or more programming languages. These computer programs may be provided to the processors of general-purpose computers, special-purpose computers or other programmable data processing devices, so that when executed by the processors, the computer programs cause the functions/operations specified in the flowcharts and/or block diagrams to be implemented. The computer programs can be completely executed on a machine, partially executed on a machine, partially executed on a machine as an independent software package, partially executed on a remote machine or completely executed on a remote machine or server.

In the context of the invention, a computer-readable storage medium can be a tangible medium that can contain or store a computer program for use by or in connection with an instruction execution system, apparatus or device. Computer-readable storage media can include, but are not limited to, electronic, magnetic, optical, electromagnetic, infrared, or semiconductor systems, apparatuses or devices, or any suitable combination of the above. Alternatively, the computer-readable storage medium may be a machine-readable signal medium. More specific examples of machine-readable storage media will include electrical connection based on one or more wires, portable computer disk, hard disk, random access memory (RAM), read-only memory (ROM), erasable programmable read-only memory (EPROM or flash memory), optical fiber, compact disk read-only memory (CD-ROM), optical storage device, magnetic storage device, or any suitable combination of the above.

In order to provide interaction with a user, the systems and techniques described herein can be implemented on the electronic device having a display device (for example, a cathode ray tube (CRT) or a liquid crystal display (LCD) monitor) for displaying information to the user; and a keyboard and a pointing device (for example, a mouse or a trackball) through which the user can provide input to the electronic device. Other kinds of devices can also be used to provide interaction with the user. For example, the feedback provided to the user can be any form of sensory feedback (for example, visual feedback, auditory feedback, or tactile feedback); and the input from the user can be received in any form, including acoustic input, voice input or tactile input.

The systems and techniques described herein may be implemented in a computing system that comprises a back-end component (e.g., as a data server), or a computing system that comprises a first component (e.g., an application server), or a computing system that comprises a front-end component (e.g., a user computer with a graphical user interface or a web browser through which a user can interact with implementations of the systems and techniques described herein), or a computing system that comprises any combination of the back-end component, the first component and the front-end component. Components of the system can be interconnected through digital data communication in any form or medium (for example, communication network). Examples of communication networks include local area network (LAN), wide area network (WAN), blockchain network and Internet.

The computing system may comprise a client and a server. The client and the server are generally away from each other and usually interact through a communication network. The relationship between the client and the server is generated by running computer programs on respective computers that have a client-server relationship with each other. The server can be a cloud server, also known as a cloud computing server or cloud host, which is a host product in the cloud computing service system that addresses the management difficulties and weak scalability of traditional physical hosts and VPS services.

It should be understood that the various forms of processes shown above may be used, steps are rearranged or added or deleted. For example, the steps described in this invention can be performed in parallel, sequentially, or in a different order, which is not limited here, as long as the desired results of the technical solution of the invention can be achieved.

The above specific implementations do not limit the scope of protection of the invention. It should be understood by those skilled in the art that various modifications, combinations, sub-combinations and substitutions can be made according to design requirements and other factors. Any modification, equivalent substitution and improvement made within the spirit and principle of the invention should be included in the protection scope of the invention.

**Claims**

1. A consistency tracking control method for a multi-agent system, comprising:

   constructing a communication topological graph of the multi-agent system and a dynamic model of a leading agent and following agents that satisfies Lipschitz continuity;
   determining a tracking error of the multi-agent system, and a goal of consistency tracking control and parameter matrix information when the multi-agent system meets preset assumed conditions according to the dynamic model and the communication topological graph;
   determining relative state information between each following agent and its corresponding neighboring agent, judging whether a relative state value of the multi-agent system is obtainable, and determining a judgment result; and
   determining a consistency tracking controller of the multi-agent control system according to the judgment result, the relative state information and the parameter matrix information, to cause the tracking error meets the goal of consistency tracking control by the consistency tracking controller.

2. The method according to claim 1, wherein constructing the communication topological graph of the multi-agent system comprises:

   determining a node set, a directed edge set and a directed path between two nodes corresponding to the multi-agent system according to each of agents in the multi-agent system and an information flow direction; and

determining the communication topological graph according to the node set, the directed edge set and the directed path.

3. The method according to claim 1, wherein determining the consistency tracking controller of the multi-agent control system according to the judgment result and the parameter matrix information comprises:

if the judgment result is that the relative state value is obtainable, determining a first controller of the multi-agent control system according to the relative state information, the parameter matrix information and the assumed conditions;
taking the first controller as the consistency tracking controller; and
if the judgment result is that the relative state value is not obtainable, determining relative output information between each following agent and its corresponding neighboring agent;
determining a second controller for each of agents included in the dynamic model based on the relative output information and the assumed conditions;
taking the second controller as the consistency tracking controller.

4. The method according to claim 3, wherein determining the second controller for each of agents included in the dynamic model based on the relative output information and the assumed conditions comprises:

constructing an unknown input observer for the relative state information based on the relative output information;
determining a finite-time observer of the multi-agent system according to the unknown input observer; and
if the assumed conditions and the set conditions are met, determining the second controller based on the finite-time observer.

5. The method according to claim 4, wherein constructing the unknown input observer for the relative state information based on the relative output information comprises:

determining a dynamic system for the relative output information and the relative state information;
performing non-singular transformation on the dynamic system to determine a state space matrix of the dynamic system; and
determining the unknown input observer according to the state space matrix.

6. The method according to claim 1, further comprising:
proving the validity of the consistency tracking controller by using the Lyapunov function and Lasalle's theorem.

7. The method according to any one of claims 1-6, wherein the assumed conditions comprise:

the communication topological graph at least comprises a directed spanning tree,
control input of the leading agent is continuous and bounded, and
a given matrix A and a given matrix B included in the dynamic model are stabilizable.

8. A consistency tracking control apparatus for a multi-agent system, comprising:

a construction module configured to construct a communication topological graph of the multi-agent system and a dynamic model of a leading agent and following agents that satisfies Lipschitz continuity;
a first determination module configured to determine a tracking error of the multi-agent system, and a goal of consistency tracking control and parameter matrix information when the multi-agent system meets preset assumed conditions according to the dynamic model and the communication topological graph;
a second determination module configured to determine relative state information between each following agent and its corresponding neighboring agent, judge whether a relative state value of the multi-agent system is obtainable, and determine a judgment result; and
a third determination module configured to determine a consistency tracking controller of the multi-agent control system according to the judgment result, the relative state information and the parameter matrix information, to cause the tracking error meets the goal of consistency tracking control by the consistency tracking controller.

9. An electronic device, comprising:

at least one processor; and

a memory communicatively coupled with the at least one processor;

wherein the memory stores a computer program executable by the at least one processor, and the computer program, when executed by the at least one processor, causes the at least one processor to execute the consistency tracking control method for the multi-agent system according to any one of claims 1-7.

10. A computer-readable storage medium, wherein the computer-readable storage medium stores computer instructions for causing a processor to execute the consistency tracking control method for the multi-agent system according to any one of claims 1-7.

S110

constructing a communication topological graph of the multi-agent system and a dynamic model of a leading agent and following agents that satisfies Lipschitz continuity

S120

determining a tracking error of the multi-agent system, and a goal of consistency tracking control and parameter matrix information when the multi-agent system meets preset assumed conditions according to the dynamic model and the communication topological graph

S130

determining relative state information between each following agent and its corresponding neighboring agent, judging whether a relative state value of the multi-agent system is obtainable, and determining a judgment result

S140

determining a consistency tracking controller of the multi-agent control system according to the judgment result, the relative state information and the parameter matrix information, to cause the tracking error meets the goal of consistency tracking control by the consistency tracking controller

Fig. 1

S210

constructing a communication topological graph of the multi-agent system and a dynamic model of a leading agent and following agents that satisfies Lipschitz continuity

S220

determining a tracking error of the multi-agent system, and a goal of consistency tracking control and parameter matrix information when the multi-agent system meets preset assumed conditions according to the dynamic model and the communication topological graph

S230

determining relative state information between each following agent and its corresponding neighboring agent, judging whether a relative state value of the multi-agent system is obtainable, and determining a judgment result

S240

if the judgment result is that the relative state value is obtainable, determining a first controller of the multi-agent control system according to the relative state information, the parameter matrix information and the assumed conditions

S260

if the judgment result is that the relative state value is not obtainable, determining relative output information between each following agent and its corresponding neighboring agent

S250

taking the first controller as the consistency tracking controller

S270

determining a second controller for each of agents included in the dynamic model based on the relative output information and the assumed conditions

S230

taking the second controller as the consistency tracking controller

Fig. 2

Fig. 3

Fig. 4

Fig. 5

Fig. 6

Fig. 7

Fig. 8

## INTERNATIONAL SEARCH REPORT

| International application No. |
| --- |
| **PCT/CN2023/125193** |

**A. CLASSIFICATION OF SUBJECT MATTER**

G05B19/042(2006.01)i

According to International Patent Classification (IPC) or to both national classification and IPC

**B. FIELDS SEARCHED**

Minimum documentation searched (classification system followed by classification symbols)

IPC:G05B19; G05B13

Documentation searched other than minimum documentation to the extent that such documents are included in the fields searched

Electronic data base consulted during the international search (name of data base and, where practicable, search terms used)

CNTXT, ENTXTC, ENTXT, VEN, DWPI, CNKI, IEEE, WEB OF SCIENCE: 多智能体, 领导者, 领航者, 跟随者, 邻居, 相邻, 跟踪, 误差, 一致, 相对状态, 相对输出, 拓扑图, multi-agent, leader, follower, neighbor, track+, error, relative, state, topological graph

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116047984 A (BEIJING NATIONAL RAILWAY RESEARCH & DESIGN INSTITUTE OF SIGNAL & COMMUNICATION LTD.) 02 May 2023 (2023-05-02) <br> description, paragraphs 33-230, and figures 1-8 | 1-10 |
| PX | WANG, Qi et al. "Cooperative Tracking for High-Order Nonlinear Multi-Agent Systems via Adaptive Control" <br> *Proceedings of the 42nd Chinese Control Conference,* 26 July 2023 (2023-07-26), pages 6075-6080 <br> pages 6075-6080 | 1-2, 6-10 |
| X | WANG, Qi et al. "Cooperative Tracking for High-Order Lipschitz Nonlinear Multi-Agent Systems via Adaptive Control" <br> *Proceedings of the 35th Chinese Control Conference,* 29 July 2016 (2016-07-29), pages 7961-7966 <br> pages 7961-7966 | 1-2, 6-10 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 December 2023** | **21 December 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/125193** |

**C.      DOCUMENTS CONSIDERED TO BE RELEVANT**

| Category* | Citation of document, with indication, where appropriate, of the relevant passages | Relevant to claim No. |
| --- | --- | --- |
| X | WANG, Qi et al. "Leader-Follower Consensus for High-Order Integrator Systems with Lipschitz Nonlinear Dynamics" <br> *Proceedings of the 34th Chinese Control Conference,* 30 July 2015 (2015-07-30), pages 7096-7101 <br>       pages 7096-7101 | 1-2, 6-10 |
| A | CN 113589694 A (XIAMEN UNIVERSITY) 02 November 2021 (2021-11-02) <br>       entire document | 1-10 |
| A | CN 110109351 A (GUANGDONG UNIVERSITY OF TECHNOLOGY) 09 August 2019 (2019-08-09) <br>       entire document | 1-10 |
| A | CN 114861435 A (NANJING UNIVERSITY OF AERONAUTICS AND ASTRONAUTICS) 05 August 2022 (2022-08-05) <br>       entire document | 1-10 |
| A | CN 112305918 A (NANJING UNIVERSITY OF AERONAUTICS AND ASTRONAUTICS) 02 February 2021 (2021-02-02) <br>       entire document | 1-10 |
| A | CN 112947407 A (SOUTH CHINA UNIVERSITY OF TECHNOLOGY) 11 June 2021 (2021-06-11) <br>       entire document | 1-10 |
| A | US 10983532 B1 (SARSILMAZ SELAHATTIN BURAK et al.) 20 April 2021 (2021-04-20) <br>       entire document | 1-10 |
| A | KR 101935006 B1 (CHUNG-ANG UNIVERSITY INDUSTRY-ACADEMY COOPERATION FOUNDATION) 03 January 2019 (2019-01-03) <br>       entire document | 1-10 |

Form PCT/ISA/210 (second sheet) (July 2022)

**INTERNATIONAL SEARCH REPORT**
Information on patent family members

International application No.

**PCT/CN2023/125193**

| Patent document cited in search report | | | Publication date (day/month/year) | Patent family member(s) | | | Publication date (day/month/year) |
|---|---|---|---|---|---|---|---|
| CN | 116047984 | A | 02 May 2023 | CN | 116047984 | B | 06 June 2023 |
| CN | 113589694 | A | 02 November 2021 | CN | 113589694 | B | 18 August 2023 |
| CN | 110109351 | A | 09 August 2019 | CN | 110109351 | B | 18 May 2021 |
| CN | 114861435 | A | 05 August 2022 | None | | | |
| CN | 112305918 | A | 02 February 2021 | None | | | |
| CN | 112947407 | A | 11 June 2021 | None | | | |
| US | 10983532 | B1 | 20 April 2021 | None | | | |
| KR | 101935006 | B1 | 03 January 2019 | None | | | |

Form PCT/ISA/210 (patent family annex) (July 2022)